# EUROPEAN PATENT APPLICATION

(11) **EP 2 364 955 A1**
(43) Date of publication of application: **14.09.2011**
(21) Application number: 09831892.6
(22) Date of filing: 08.12.2009
(51) Int. Cl.: C02F 3/34, C02F 3/10, C02F 3/28

(54) **NITRATE-REMOVING BIOREACTOR, METHOD FOR FORMING NITRATE-REMOVING BIOFILM, AND NITRATE-REMOVING METHOD**

(30) Priority: 10.12.2008 JP 2008315100
(71) Applicant: Fujita, Takurou, Aomori 036-8155 (JP)
(72) Inventor: Fujita, Takurou, Aomori 036-8155 (JP)
(74) Representative: Jenkins, Peter David
(86) International application number: PCT/JP2009/070516
(87) International publication number: WO 2010/067788

(57) **Abstract**

Disclosed is a bioreactor which is capable of efficiently removing nitrate ions. A nitrate-removing bioreactor (1) comprises a reaction container (2) and an introduction part (3) for introducing a fermentation source (S) into the reaction container (2), said introduction part (3) being provided onto the upper part of the reaction container (2). The reaction container (2) produces an organic acid (A) by anaerobic fermentation of the fermentation source (S), and is partially provided with a structure (4) through which the organic acid (A) can permeate. A ceramic material can be used for the organic acid-permeable structure (4).

## Description

### Technical Field

The present invention relates to a bioreactor for removing nitrate, a method for producing biofilm for removing nitrate, and a method for removing nitrate, particularly relates to a bioreactor for removing nitrate, a method for producing biofilm for removing nitrate, and a method for removing nitrate, which achieve an excellent function of removing a nitrate ion NO³⁻ can (hereinafter simply referred to as "NO³" or "nitrate") by a simple configuration. The present invention is a technique which can be widely applied, regardless of the scale, to small-scale applications such as domestic-level water tanks, to large-scale water treatment facilities such as aquariums, culture facilities, sewage treatment plants, and human waste treatment facilities, or to polluted open hydrosphere such as pond and lake.

### Background Art

When rearing aquatic life including fishes, a suitable change of rearing water has been important regardless of the size of the scale. The reason for changing rearing water is to remove high-concentration NO³ accumulated in the water tank along with the rearing water. The water change has been widely performed for removing nutrient salt from the water containing a large amount of nutrient salt such as NO³ (hereinafter referred to as "nutrient salt-containing water") in the rearing of aquarium fish including tropical fish at home or the like, in the rearing of aquatic life for experiments in research institutions, or in fish culture industry.

However, the work to change rearing water is work requiring labor and cost. Then, for such a purpose, various water treatment techniques using a bioreactor have conventionally been proposed. For example, there is disclosed a technique for producing biofilm on the outside surface of a polyethylene membrane by filling a closed compartment with methanol and allowing the methanol to ooze out of the membrane (Patent Document 1), or a technique of mixing an organic carbon compound with waste water and removing nutrient salt by a method of supplying the mixture from above biofilm or by an activated sludge method (Patent Document 2).

Further, the trial for removing nitrate is not limited to a bioreactor, and there have been proposed various technical proposals such as a method of depositing coral sand and using the deposit, a method of providing a partition of a foamed cellulose wall, a method of covering with fine sand, or a method of adding sugar to water by drip infusion.

Patent Document 1
   Japanese Patent Laid-Open No. 2000-237791 "Method of removing nitrogen in nitrate nitrogen-containing water and denitrification bioreactor"
Patent Document 2
   Japanese Patent Laid-Open No. 08-1192 "Biological denitrification apparatus"

### Disclosure of the Invention

### Problems to be Solved by the Invention

Now, a huge bioreactor, which is used for nutrient salt-containing water treatment in a fish farm, an aquarium or other facilities, has the following features:
- A semipermeable membrane is used to divide water to be treated and an organic carbon charging compartment;
- A large amount of microorganisms is produced on one side of the semipermeable membrane and adhered to it (microorganism film, biofilm);
- A relatively lower alcohol is used as an organic carbon; and
- The semipermeable membrane has holes of a uniform size.

However, although such a structure is useful in the water treatment step on a facility level, the structure, as it is, cannot be applied to a small system such as a domestic water tank. This is because since a huge bioreactor has a uniform semipermeable membrane as mentioned above and uses a lower alcohol, the alcohol is not well absorbed in an undeveloped microorganism film in the early stage, but the alcohol flows out into the water to be treated (nutrient salt-containing water as a target of treatment), which allows the microorganism to proliferate in the state that it is drifting in the water to be treated to cloud the water and consume oxygen, resulting in giving damage to rearing fish or the like. Therefore, the outflow of alcohol in the early stage of reaction must be avoided in a system where the amount of water is small and a special water treatment technique cannot be used in combination, and a lower alcohol cannot be used as an organic carbon. A technique to gradually release an organic carbon with the increase of biofilm thickness is required.

Further, the above technique disclosed in Patent Document 1 has a problem that since the methanol permeation rate of a polyethylene membrane changes in proportion to temperature, a large amount of methanol flows into hydrosphere (into treated water) before biofilm is sufficiently formed, thereby increasing BOD of this water area and consuming dissolved oxygen.

The technique disclosed in Patent Document 2 is a technique which is not suitable for treating a large amount of water because methanol is expensive in organic carbon compounds. Further, when the water area has been made excessively oligotrophic, removal of the apparatus from water is the only method that can be taken, and there is a problem that adhering microorganism becomes extinct and rots, producing a nasty smell.

Further, a technique of constructing a system by a method of mixing an organic carbon compound with waste water to adjust the C/N ratio has a problem of producing a large amount of filamentous bacteria, causing bulking (a phenomenon in which separation of a microbial group and water to be treated becomes impossible) within the system to extremely reduce filtration efficiency or increase the volatility (range of fluctuation) of water quality.

An object of the present invention is to resolve the problems and disadvantages of conventional technologies as described above and to provide a bioreactor for removing nitrate, a method for producing biofilm for removing nitrate, and a method for removing nitrate, which can achieve an excellent nitrate ion-removing effect and a water-purifying effect by a simple configuration.

That is, an object of the present invention is to provide a bioreactor for removing nitrate, a method for producing biofilm for removing nitrate, and a method for removing nitrate, which can efficiently remove nitrate ions and purify water without causing generation of a situation where an organic compound unintentionally flows out into water to be treated in the early stage of biofilm formation to thereby increase the BOD in a water area and consume dissolved oxygen.

Another object of the present invention is to provide a bioreactor for removing nitrate, a method for producing biofilm for removing nitrate, and a method for removing nitrate, which can not only be applied to large-scale water treatment facilities, but can also be applied to small-scale applications such as domestic-level water tanks, and can achieve a nitrate ion removal effect and water purification effect excellent in practicality.

### Means for Solving the Problems

As a result of investigation of the above problems by the inventor of the instant application, it has been found that the above problems can be solved by introducing a new technical idea into the structure of a bioreactor and the fermentation source to be used, and thus the present invention has been accomplished. That is, the invention which is claimed by the present application as means for solving the above problems or the invention at least disclosed is as follows.
(1) A bioreactor for removing nitrate which allows a microorganism to metabolize nutrient salt in nutrient salt-containing water, the bioreactor comprising: a reaction vessel; and a charging part provided on the reaction vessel for charging a fermentation source into the reaction vessel, the reaction vessel being for anaerobically fermenting the fermentation source fed into the reaction vessel to produce organic acids, and being provided, as at least a part thereof, with an organic acid-permeable structure through which the organic acid can permeate, wherein the bioreactor is installed and used such that the reaction vessel is under water and a charging end of the charging part is above the water surface to allow the nitrate in the nutrient salt-containing water to be removed.
(2) The bioreactor for removing nitrate according to (1), wherein the organic acid-permeable structure is formed of a porous material.
(3) The bioreactor for removing nitrate according to (1) or (2), wherein the organic acid-permeable structure comprises pores having two or more pore diameters.
(4) The bioreactor for removing nitrate according to (1), wherein the organic acid-permeable structure comprises a ceramic material including brick and unglazed tile.
(5) The bioreactor for removing nitrate according to (1), wherein the organic acid-permeable structure comprises a ceramic material including brick and unglazed tile, and an auxiliary material including sawdust.
(6) The bioreactor for removing nitrate according to any of (1) to (5), wherein the organic acid-permeable structure is formed as the whole of at least one side surface of the reaction vessel.
(7) The bioreactor for removing nitrate according to any of (1) to (6), wherein the charging part is a charging tube.
(8) A method for producing biofilm for removing nitrate having a nitrate-removing function in a bioreactor for removing nitrate according to any of (1) to (7), the method for producing biofilm for removing nitrate comprising the steps of: providing an organic carbon compound as the fermentation source; charging the fermentation source into the reaction vessel through the charging part to thereby degrade the fermentation source by anaerobic fermentation to produce organic acids; and allowing the produced organic acids to permeate through the organic acid-permeable structure out of the reaction vessel to thereby produce biofilm comprising a nitrate-utilizing microorganism on an outside surface of the organic acid-permeable structure in an aerobic environment.
(9) The method for producing biofilm for removing nitrate according to (8), wherein the organic carbon compound is a readily degradable saccharide including sucrose.

(10) A method for removing nitrate in nutrient salt-containing water using a bioreactor for removing nitrate according to any of (1) to (7), the method for removing nitrate comprising: providing an organic carbon compound as the fermentation source; charging the fermentation source into the reaction vessel through the charging part to thereby degrade the fermentation source by anaerobic fermentation to produce organic acids; allowing the produced organic acids to permeate through the organic acid-permeable structure out of the reaction vessel to thereby produce biofilm comprising a nitrate-utilizing microorganism on an outside surface of the organic acid-permeable structure in an aerobic environment; and decomposing and removing the nitrate in the nutrient salt-containing water with the biofilm.
(11) The method for removing nitrate according to (10), wherein the organic carbon compound is a readily degradable saccharide.
(12) The method for removing nitrate according to (11), wherein the readily degradable saccharide is a disaccharide including sucrose and maltose.
(13) The method for removing nitrate according to (11), wherein the readily degradable saccharide is a monosaccharide including galactose, fructose, glucose, and mannose.

(14) The method for removing nitrate according to (11), wherein the readily degradable saccharide is a polysaccharide including amylose, amylopectin, starch, agarose, polydextrose, and mannan.
(15) The method for removing nitrate according to any of (10) to (14), wherein a liquid is charged in a controlled amount into the charging part to thereby control the permeated amount of the organic acids.
(16) The method for removing nitrate according to (15), wherein a hydrophilic liquid including water is used as the liquid.
(17) The method for removing nitrate according to (15) or (16), wherein a hydrophobic liquid is charged into the charging part to thereby increase an internal degree of anaerobicity to control the permeated amount of the organic acids.

That is, a typical embodiment of the present invention, which will be described in detail below as Examples, includes charging an organic carbon compound, specifically a readily degradable saccharide such as sucrose (cane sugar) into a closed compartment which is a reaction vessel of a bioreactor, at least a part of the outer wall of which is formed of a porous layer, depolymerizing the saccharide by anaerobic fermentation to produce organic acids, and permeating and releasing the organic acids into water to be treated through a porous layer. At this time, the organic acids are prevented and suppressed from flowing out into the water to be treated in an amount exceeding the treatment capacity of gradually-formed biofilm by the porous layer having pore diameters suitable for permeating the organic acids and the diversity of pore diameter sizes. The permeated organic acids are aerobically degraded on the outside surface of the porous layer by the microorganism which forms the biofilm, and the nutrient salt is actively transported inside the microorganism and assimilated. Thereby, the nutrient salt is removed from the nutrient salt-containing water, which can contribute to the organism group in the water area.

Note that, although "nitrate" referred to in the bioreactor for removing nitrate, the method for producing biofilm for removing nitrate, and the method for removing nitrate of the present invention means nitrate ion NO³⁻ as described above, "nitrate" widely includes those which take the form of NO³⁻ by dissociation in a liquid. Therefore, "nitrate" includes the case where the form of a nitrate is taken and the case where the form of HNO³ is taken.
In addition, note that although the organic compound is generally a generic name for carbon compounds excluding a small number of carbon compounds having a simple structure such as oxides of carbon and carbonates of metal, the "organic carbon compound" is used in the invention of the instant application particularly in order to clearly exclude so-called inorganic compounds such as oxides of carbon.

### Advantages of the Invention

The bioreactor for removing nitrate, the method for producing biofilm for removing nitrate, and the method for removing nitrate of the present invention are configured as mentioned above. Therefore, according to these, nitrate ions can be efficiently and practically removed and water can be purified by a simple configuration. That is, according to the present invention, a nitrate ion removing effect and a water purification effect are efficiently obtained without causing generation of a situation where an organic compound flows out into water to be treated in the early stage of biofilm formation to thereby increase the BOD in a water area and consume dissolved oxygen.

The present invention can be widely applied, regardless of the scale, to large-scale water treatment facilities such as aquariums, culture facilities, sewage treatment plants, and human waste treatment facilities, or to polluted hydrosphere such as pond and lake, and in particular, the present invention can efficiently and practically remove nitrate ions and purify water even in small-scale applications such as domestic-level water tanks.

### Brief Description of the Drawings

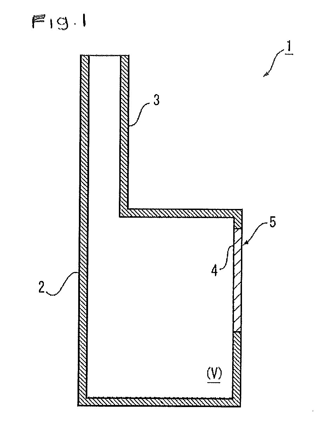

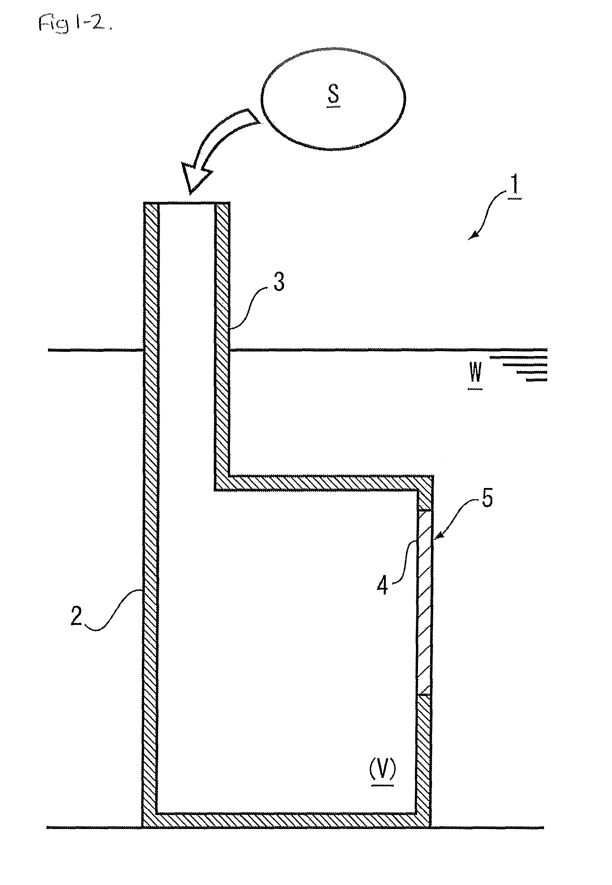

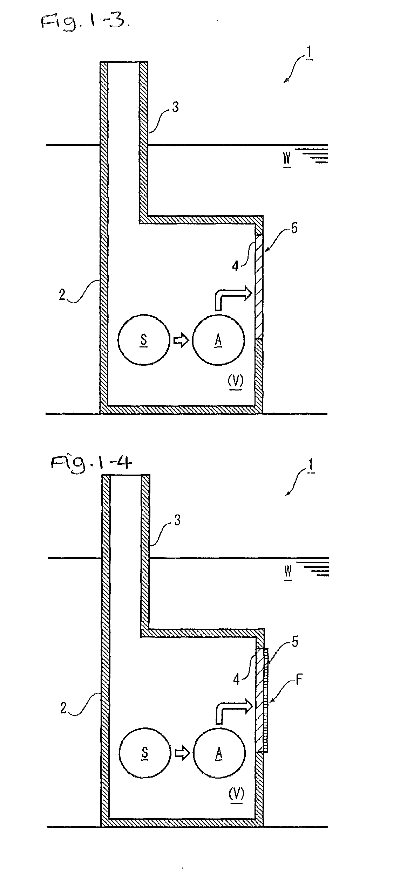

Figure 1 is an explanatory view (sectional view) showing the basic configuration of a bioreactor for removing nitrate of the present invention;
Figure 1-2 is an explanatory view (sectional view) showing a method for using the bioreactor of the present invention of Figure 1;
Figure 1-3 is an explanatory view (sectional view) showing the effect in the bioreactor of the present invention of Figure 1;
Figure 1-4 is an explanatory view (sectional view) showing the effect in the bioreactor of the present invention of Figure 1;
Figure 2 is a perspective exploded view (a) and an assembly drawing (b) showing an Example of the bioreactor for removing nitrate of the present invention;
Figure 3 is a perspective exploded view (a) and an assembly drawing (b) showing another Example of the bioreactor for removing nitrate of the present invention;
Figure 4 is an explanatory view (sectional view) showing an example of the method for removing nitrate of the present invention;
Figure 5 is a graph showing the nitrate removal ability test results with fresh water in an Example; and
Figure 6 is a graph showing the nitrate removal ability test results with sea water in an Example.

### Description of Symbols

1, 21, 31 ... Bioreactor for removing nitrate
2, 22, 32 ... Reaction vessel
3, 23, 33 ... Charging part
4, 24, 34 ... Organic acid-permeable structure
5, 25, 35 ... Outside surface of organic acid-permeable structure
38 ... Bottom part of vessel
A ... Organic acids
F ... Biofilm
L ... Liquid (for controlling the permeated amount)
S ... Fermentation source
V, 2V, 3V ... Inside of reaction vessel
W ... Water to be treated (nutrient salt-containing water)

### Best Mode for Carrying Out the Invention

Hereinafter, the present invention will be described in detail with reference to the drawings.
Figure 1 is an explanatory view (sectional view) showing the basic configuration of a bioreactor for removing nitrate of the present invention.
Further,
Figure 1-2 is an explanatory view (sectional view) showing a method for using the bioreactor of the present invention of Figure 1; and
Figures 1-3 and 1-4 are explanatory views (sectional views) each showing the effect in the bioreactor of the present invention of Figure 1.

The present bioreactor for removing nitrate 1 which allows a microorganism to metabolize nutrient salt in nutrient salt-containing water comprises a reaction vessel 2 and a charging part 3 provided in the reaction vessel 2 for charging a fermentation source S into the reaction vessel 2, as shown in these figures. And the present bioreactor 1 for removing nitrate is mainly configured such that the reaction vessel 2 is for anaerobically fermenting the fermentation source S charged into the reaction vessel 2 to produce organic acids A, and is provided, as at least a part of the reaction vessel 2, with an organic acid-permeable structure 4 through which the organic acids A can be permeated.

The organic acid-permeable structure 4 may be provided in a part of the outer wall which forms the reaction vessel 2 or in the whole area of the outer wall as long as there is no trouble in the anaerobic fermentation in the reaction vessel 2. When the structure is provided in a part of the outer wall, the percentage of the structure relative to the total surface area of the reaction vessel 2 is not at all limited.

"Metabolism" is a concept including both assimilation and dissimilation in the present invention. That is, in the present bioreactor for removing nitrate 1, the nutrient salt in nutrient salt-containing water may be not only assimilated by microorganisms but also dissimilated thereby. For example, when biofilm F is formed thickly, bacteria which "dissimilate" nitrate in nutrient salt by nitrate respiration will propagate in a layer at a depth of 5 µm or more from the surface. Further, when the bacteria propagate in a certain thickness or more to consume nitrate, bacteria which dissimilate sulfuric acid by sulfate respiration may appear.

That is, the organic acid-permeable structure 4 may be a structure provided with pores having a size sufficient for allowing the molecules of various organic acids A to permeate therethrough or a size larger than this size. That is, such a structure, which is formed of a porous material, specifically can be suitably formed, for example, by using a ceramic material including wet or dry burned brick and unglazed tile. In short, in addition to such a ceramic material, a porous material having a structure to allow organic acids to permeate therethrough can be widely used as the organic acid-permeable structure 4 of the present invention.

By such a configuration, the bioreactor for removing nitrate 1 of the present invention is installed and used such that the reaction vessel 2 is under water W and the charging end of the charging part 3 is above the water surface, as shown in Figure 1-2 and the like. First, the fermentation source S is charged through the charging part 3. The method for charging the fermentation source S is not particularly limited, and the fermentation source S may be charged at a time or may be charged dividedly. The fermentation source S may appropriately be additionally charged depending on the growth situation of the biofilm F or the like. In the inside (V) of the reaction vessel 2, the discharged fermentation source S is anaerobically fermented to produce the organic acids A. The organic acids A permeate through the organic acid-permeable structure 4 and are released to the outside from the inside (V) of the reaction vessel 2. Then, as shown in Figure 1-4, the organic acids A are subjected to aerobic degradation reaction by the biofilm F comprising a nitrate-utilizing microorganism to be formed on the outside surface 5 of the organic acid-permeable structure 4.

That is, the organic acid-permeable structure 4 may be a structure provided with pores having a size sufficient for allowing the molecules of various organic acids A to permeate therethrough or a size larger than this size, these sizes being smaller than the size of the molecules of the fermentation source S charged into the inside (V) of the reaction vessel 2. However, it is highly desirable that the organic acid-permeable structure 4 according to the present invention comprise pores having two or more pore diameters, unlike a conventional structure having a uniform pore diameter.

This is because the presence of a distribution of the pore diameter size creates a difference in the ease of releasing the produced organic acid A to the outside of the reaction vessel 2, which prevents the organic acids A from being released at a stroke, capable of achieving gradual or continuous release over a longer time period. This can prevent and suppress the outflow of the organic carbon compound in an amount exceeding the capacity of the biofilm F in the course of formation into the water to be treated W.

As shown in Figure 1 and the like, the charging part 3 of the bioreactor for removing nitrate 1 of the present invention is desirably a tubular structure, that is, a charging tube. Although other structures are not excluded, this is because a tubular structure having a small cross-sectional area is convenient for the anaerobic fermentation in the inside (V) of the reaction vessel 2. Further, such a structure is convenient also for controlling the permeated amount of the organic acids to be described below. Note that a top cover may be provided on the charging part 3. Furthermore, the charging part 3 does not necessarily need to be provided at the top of the reaction vessel 2 as shown in these figures, but may be configured to be provided on the side surface of the reaction vessel 2. In short, any configuration in which the charging end is above the water surface is within the scope of the present invention.

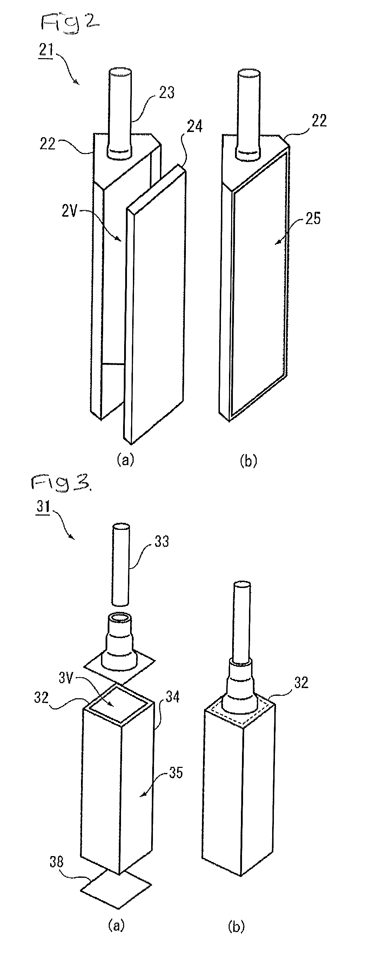

Figures 2 and 3 are perspective exploded views (a) and assembly drawings (b) showing Examples of the bioreactor for removing nitrate of the present invention. As shown in Figure 2, the bioreactor 21 of the present invention is configured such that the organic acid-permeable structure 24 is formed as the whole of at least one side surface of the reaction vessel 22. Note that, similarly in Figure 3, the bioreactor of the present invention may be configured such that the organic acid-permeable structure 34 is formed as the whole of at least one side surface of the reaction vessel 32, but another configuration is also possible. For example, the organic acid-permeable structure may be formed on only a part of the region of one side surface of the reaction vessel, or the organic acid-permeable structure may be formed on any one region or a plurality of regions over a plurality of side surfaces of the reaction vessel, or the organic acid-permeable structure may be provided on a part or the whole of the bottom of the reaction vessel. All these configurations are within the scope of the present invention.

The method for producing a biofilm for removing nitrate according to the present invention will be further described (refer to Figure 1 to Figure 1-4 cited above).
The bioreactor for removing nitrate 1 is used, and an organic carbon compound is used as the fermentation source S, which is charged into the inside (V) of the reaction vessel 2 through the charging part 3. Note that, into the inside (V) of the reaction vessel 2, it is desirable to put another nutrient, for example, an amino acid-fermented fertilizer, a yeast product, or the like, other than the fermentation source S such as sucrose to be described below. As the yeast product, a commercially available yeast plant for bread is the optimum.
For example, Nisshin Super Kameria Dry Yeast (registered trademark) manufactured by Nisshin Seifun Group Inc. or the like is included. The fermentation rate can be changed by the addition amount, but the optimum fermentation rate can be obtained by the addition of 0.2 to 0.5 g. Further, when the amino acid-fermented fertilizer is used, for example, "HYPONeX (registered trademark) stock solution 6:10:5" available from HYPONeX JAPAN CORP., LTD. can be suitably used.

Thereby, the fermentation source S is degraded by anaerobic fermentation to produce the organic acids A. The produced organic acids A are gradually permeate out of the reaction vessel 2 through the organic acid-permeable structure 4 depending on the process in which the anaerobic fermentation advances, thereby producing the biofilm F comprising a nitrate-utilizing microorganism on the outside surface 5 of the organic acid-permeable structure 4 in an aerobic environment. The nitrate in the water to be treated W (nutrient salt-containing water) is utilized by the biofilm F thus formed, removing the nitrate from water.

That is, the bioreactor 1 of the present invention can efficiently produce the biofilm F by combining an anaerobic region on the inside (V) of the reaction vessel 2 and an aerobic region on the outside of the reaction vessel 2 to move the energy source from the inside to the outside without moving the microorganism. Hereinafter, in the invention of the instant application, a series of reactions performed over the inside and the outside of the bioreactor are also referred to as the "separated two-stage fermentation".

Note that, in the early stage of the growth step of biofilm, there is a limit in the capacity of treating organic acids, and a large amount of organic acids cannot be treated. However, in the present invention, the process in which an organic carbon compound is degraded into low-molecular organic acids by anaerobic fermentation by the anaerobic fermentation on the inside (V) of the reaction vessel 2 by the separated two-stage fermentation gradually advances over a long time period depending on the progress of the anaerobic fermentation in the whole of the inside (V) of the reaction vessel 2. Therefore, it is possible to allow the low-molecular organic acids to gradually ooze out in accordance with the growth of the biofilm F on the outside surface 5 of the organic acid-permeable structure 4.

This can efficiently promote the growth of the biofilm with an inexpensive material without increasing the BOD in water and without wasting the organic carbon compound. Further, since the organic acids are the organic matter highest in the utilization rate by denitrifying bacteria, the denitrification rate is increased in the micro anaerobic region in the biofilm.

As the organic carbon compound which is the fermentation source S for producing the organic acids A, any readily degradable saccharide can be suitably used. For example, sucrose can be suitably used because it is inexpensive and easily produces target organic acids by anaerobic fermentation.
Here, "readily degradable" means a property in which the saccharide can be easily depolymerized to the level of organic acids by anaerobic fermentation.

Note that, since the fermentation source S may only be a readily degradable saccharide, other than sucrose, so-called disaccharides such as maltose and sucrose, so-called monosaccharides such as galactose, fructose, glucose, and mannose, and so-called polysaccharides such as amylose, amylopectin, starch, agarose, polydextrose, and mannan can be suitably used as the organic carbon compound of the present invention. In short, any organic carbon compound can be suitably used as the organic carbon compound of the present invention if it is an organic compound which can produce organic acids useful for the growth of nitrate-utilizing microorganisms by anaerobic fermentation. However, among the saccharides, hardly-degradable saccharides such as cellulose, hemicellulose, and chitin cannot be used.

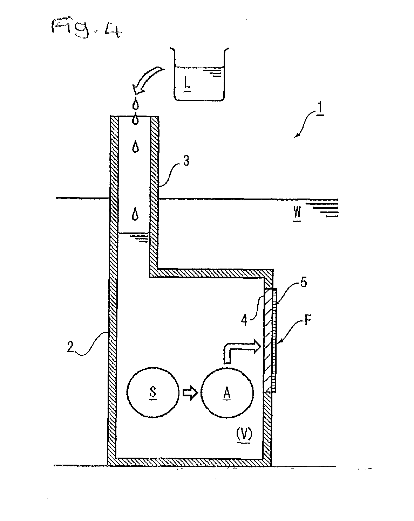

Figure 4 is an explanatory view (sectional view) showing an example of the method for removing nitrate of the present invention. As shown, the present method for removing nitrate can be configured to control the permeated amount of organic acids by charging a liquid L through the charging part 3 of the bioreactor for removing nitrate 1 and controlling the amount of the liquid L, that is, by controlling the liquid surface level up and down. That is, by increasing or decreasing the amount of the liquid L, the fluid pressure can be controlled, and the permeated amount of the organic acids A produced in the inside (V) of the reaction vessel 2 through the organic acid-permeable structure 4 can be adjusted.

By increasing the permeated amount, the growth of the biofilm F is promoted and the nitrate-removing function in water to be treated increases. On the other hand, by decreasing the permeated amount, the growth of the biofilm F is suppressed and the nitrate-removing function in water to be treated is suppressed. Therefore, when the nitrate-removing function is attempted to be enhanced, the charging amount of the liquid L may be increased, and conversely when the nitrate-removing function is attempted to be reduced, the charging amount of the liquid L may be decreased. Thus, since the metabolism (assimilation or dissimilation) effect or the denitrification effect of the bioreactor can be increased or decreased, it is not necessary to take out the whole bioreactor from water even if the action by the bioreactor is desired to be stopped when water quality becomes extremely oligotrophic.

Further, the ecological pyramid in water to be treated can also be freely moved from the lower stage. For example, when a large amount of algae produced in the water area of water to be treated is desired to be removed, organisms such as water flea or the like which can utilize algae as a nutrient is allowed to be produced in large amounts on the biofilm F, and then the thickness of the biofilm F is decreased by controlling the amount of the liquid L. Since this drives the water flea or the like produced in a large amount into a starved state, the water flea or the like will prey on the algae produced in the water area and can sweep away the algae.

Note that the liquid used here may be any hydrophilic liquid including water and a certain aqueous solution. However, sufficient effect can be obtained by using only water. Further, in order to obtain the effect of controlling the permeated amount of organic acids by increasing or decreasing only a small amount of the liquid, the charging part 3 of the bioreactor 1 is desirably a tubular structure. Further, it is convenient, for example, to use a dropping pipet for controlling the amount of the liquid L.

In the method for removing nitrate of the present invention, in combination with or instead of using water or the like as described above, a method can be used in which a hydrophobic liquid is charged into the charging part to thereby increase an internal degree of anaerobicity to control the permeated amount of the organic acids. The type of the hydrophobic liquid is not particularly limited. For example, machine oil may be used simply.

Note that although a ceramic material including brick and unglazed tile can be suitably used as the organic acid-permeable structure constituting the bioreactor for removing nitrate of the present invention as described above, a porous material in which the ceramic material is mixed with an auxiliary material may also be used. The use of the auxiliary material also allows further diversity to be added to the distribution of the pore diameter sizes to extend the range of controlling the permeation of organic acids. For example, sawdust, stone dust, or the like can be used as the auxiliary material. Note that in the invention of the instant application, ceramics broadly refers to nonmetallic inorganic materials on the whole.

### Examples

Hereinafter, Examples of the present invention will be described, but the present invention is not limited thereto.

### <1 Manufacture of bioreactor for removing nitrate and nitrate removal ability test >

### <1-1 Bioreactor for removing nitrate>

The bioreactor for removing nitrate in the form shown in Figure 3 cited above was manufactured. Brick was used for the reaction vessel. Although the organic acid-permeable structure of the bioreactor for removing nitrate of the present invention may only be provided in a part of the reaction vessel, the whole side surfaces serve as the organic acid-permeable structure because the whole side surfaces of the vessel are made of brick in this Example. Further, the charging part was a charging tube structure. The detailed specification of this bioreactor is as follows.
Brick used: type: common brick in accordance with JIS, 7 mm in thickness, 13% in percentage of water absorption, sponge wound around outside surface
Inside dimension and volume: 27*27*180 mm and 131 cm³, respectively
Materials of charging part: polypropylene for cylinder part, vinyl chloride for the vessel-connected part
Inside diameter and length of charging part: 15 mm in inside diameter, 17 cm or more in length
Whole size and weight: 41*350 mm, about 400 g

### <1-2 Nitrate removal ability test with fresh water>

10 g of sugar and 0.5 g of yeast were put into the bioreactor at one time. Note that, as described above, the optimum fermentation rate can be obtained by using 0.2 to 0.5 g of yeast. Separately, fresh water controlled to 25°C and 60 ppm-NO₃ with nitrates was prepared. The same amount of this fresh water was put in the water tank for test, and total four sections including three test sections and one control section were provided. Sugar and yeast were not put in the water tank for the control section, and only a bioreactor was provided. The nitrate concentration in each section was measured every day over 27 days.
Note that the details of the test method are as follows.

### Materials

Sugar: white sugar manufactured by Nissin Sugar Manufacturing Co., Ltd.
Yeast: Super Kameria Dry Yeast (registered trademark) manufactured by Nissin Food Products Co., Ltd.
Fresh water: water intake place: water supply by Hirosaki City (inventor's home), water intake day (water intake time): July 4, 2008, water quality: 78 in TDS (total dissolved solid), 8.1 in pH, not that BOD is unknown, adjustment: nitrate used = Otsuka House No. 3 (registered trademark) manufactured by Otsuka Chemical Co., Ltd.

### Tools

Dimension and volume of water tank: 300*240*180 mm and 12960 cm³= about 13 liters, respectively
Bioreactor for removing nitrate: as described above

### Test conditions and the like

The amount of fresh water put into the water tank: 12 liters
Test start date: one day after water intake (after removing bleaching powder)
Temperature of the fresh water in the test period: 25°C±2°C
Method of installing bioreactor for removing nitrate:
   The bioreactor was installed in the water tank at the left end thereof such that the whole of the reactor part was immersed under water; the charging end of the charging tube was above the water surface; and the bioreactor might not be in contact with the wall of the water tank, and the right side of the water tank was aerated with 0.5 liter/min of air in such a manner that the aeration does not cause water stream, thus maintaining the aerobic environment.
Water charged into the reaction vessel:
Type of water: tap water by Hirosaki City after being left for one day,
Initial charging amount: The water surface level was placed at a higher position than the water surface of fresh water in the water tank, specifically, at a position higher by 2 cm.
Control of the amount of water during the test period: nothing

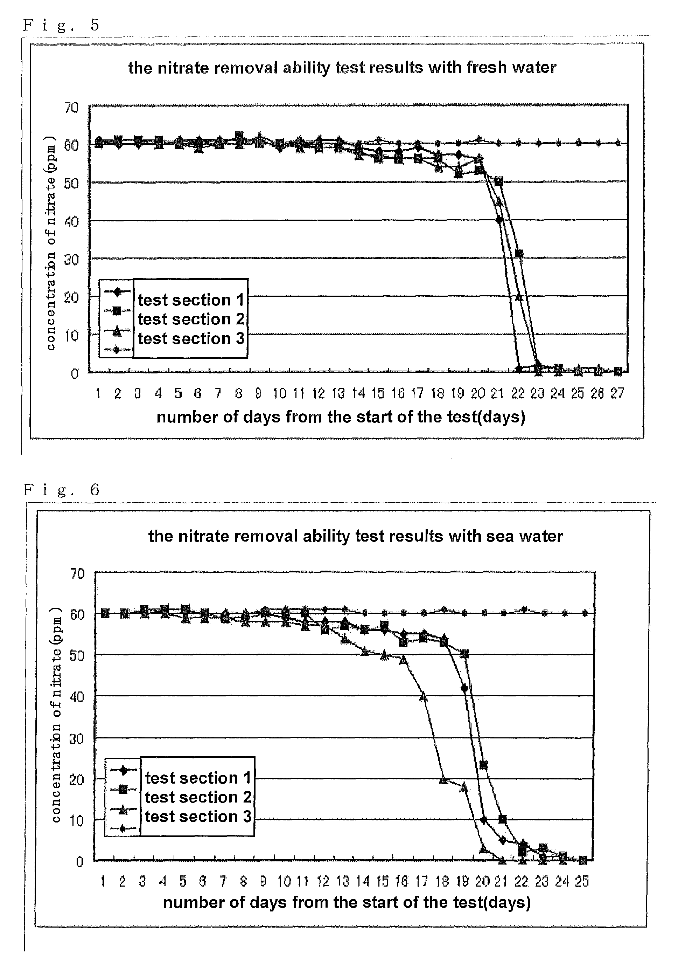

Figure 5 is a graph showing the nitrate removal ability test results with fresh water in an Example. As shown in the figure, it was possible to substantially remove the nitrate in fresh water in about a little more than three weeks from the start of the test in all of the three test sections. Further, generation of cloudiness by microorganisms was not observed during the test period. Note that the biofilm had a thickness of 5 mm on average at the time of the completion of the test.

### <1-3 Nitrate removal ability test with sea water>

The test was performed in the same manner as in the test with fresh water except that sea water was used instead of fresh water and the measurement period of nitrate was set to 25 days. The details of the sea water used are as follows.
Sea water: artificial sea water manufactured by Marinetech Co., Ltd., http://www.marine-tech.co.jp/, trade name: SEALIFE (registered trademark), nitrate used for adjustment: high purity potassium nitrate (KNO₃) for solution culture manufactured by Otsuka Chemical Co., Ltd., trade name: Otsuka House No. 3 (registered trademark)

Figure 6 is a graph showing the nitrate removal ability test results with sea water in an Example. As shown in the figure, it was possible to substantially remove the nitrate in sea water in about a little more than three weeks from the start of the test in all of the three test sections. Further, generation of cloudiness by microorganisms was not observed during the test period. Note that the biofilm had a thickness of 5 mm on average at the time of the completion of the test.

### <1-4 Discussion>

It was possible to verify sufficient nitrate removal performance of the bioreactor for removing nitrate of the present invention in both of the tests with fresh water and sea water. A water tank of a scale that can be called a domestic-level was used in the above tests, but the present invention is useful regardless of the size of treatment scale. The present invention is also satisfactory for water tanks used for stocking fish in large amounts including water tanks for business-use such as for restaurants and water tanks for test and research. The use in larger-scale fish farms, aquafarms, aquariums, or the like is also possible.

The bioreactors for removing nitrate manufactured in the present Examples were, so to speak, for domestic-level water tanks, but the manufacturing cost was able to be suppressed to a low level.

In both tests with fresh water and sea water, the nitrate concentration sharply decreased after about 22 days from the start of the test, and its reason is probably that the organic acids produced by depolymerization of sugar by anaerobic fermentation in the bioreactor has been released at one time in this time period, or the biofilm formed on the outside surface of the bioreactor has reached a thickness at which anaerobic respiration is sufficiently active, or both of these phenomena have occurred.

In both the tests with fresh water and sea water, a difference of about one day in the days required for the start of removing nitrate arose in three test sections, the reason for which is probably that the brick used as a structural material of the bioreactor originally has structural heterogeneity. The equalization of nitrate removal performance is probably possible by studying the type and quality of the porous material used as the organic acid-permeable structure of the bioreactor for removing nitrate of the present invention.

Note that in both the tests with fresh water and sea water, after the biofilm has been once formed on the outside surface of the bioreactor for removing nitrate, the resulting bioreactor was installed in another new untreated nutrient salt-containing water in which the conditions such as a water tank and water volume were set to the same as in the above Examples, and it was verified that nitrate was able to be substantially completely removed within two days after installation. That is, it was demonstrated that after the biofilm has been once formed on the outside surface of the bioreactor for removing nitrate of the present invention, it has nitrate removal performance excellent in a fast-acting property. Therefore, it is thought that the period of about three weeks required for the development of nitrate removal performance in both the tests is the period until the fermentation progresses on the inside of the bioreactor to sufficiently form a microorganism film on the outside surface.

After the completion of the above freshwater test 2, when the used bioreactor for removing nitrate was installed in a water tank in which fish was bred or inhabited, the action of the fish that it frequently bites the biofilm formed on the outside surface of the bioreactor by the mouth was observed. This was understood that the fish had eaten the biofilm, that is, a microorganism film, as food.

Further, again after the completion of the freshwater test, when the used bioreactor for removing nitrate was installed in a water tank in which no fish was present but seaweed has grown thick, water flea occurred in large amounts. This is thought that the biofilm on the outside surface of the bioreactor was a nutrient of the water flea. From the above, it has been suggested that the bioreactor for removing nitrate of the present invention not only has the performance of decomposing nitrate to remove it as nitrogen gas but also the function of polymerizing elements such as phosphorus and sulfur again to produce a nutrient for breeding and inhabiting fish or the like.

Finally, when the principle of the present invention is paraphrased, means for removing nitrate in nutrient salt-containing water provided in the present application can be referred to in short as: using a substrate capable of producing an organic compound used as a nutrient of a nitrate-utilizing microorganism by anaerobic fermentation and producing the organic compound; moving the produced organic compound to the place of aerobic fermentation from the place of anaerobic fermentation; and using an inside-outside boundary structure which limits the movement of the organic compound from the inside to the outside so that the treatment capacity of the biofilm formed in the place of aerobic fermentation may not be exceeded.

### <2 Design example of the vessel of bioreactor for removing nitrate>

### <2-1 Design example of the whole shape>

### (1) Bottle type

The whole bioreactor for removing nitrate is formed in a bottle shape such as a PET bottle, and the large-diameter part is used as a reaction vessel and the small-diameter part above the reaction vessel is used as a charging part. The charging part may be equipped with a lid. It is possible to create a feature in designability, handlability, and stability.

### (2) Canteen type

The whole vessel of the bioreactor for removing nitrate is formed cylindrical, and the top end is equipped with, for example, a screwed type lid like a lid of a canteen. This part is used as a charging part. It is possible to create a feature in designability, handlability, and stability.

### <2-2 Design example of charging part or reaction vessel>

### (1) A plurality of charging parts

There is provided a single reaction vessel, to which two, three, or more charging parts are connected. The specifications such as the size and the shape of the charging parts may be the same, partly different, or totally different. It is possible to create a feature in handlability, control of a fermentation source to be charged, and designability.

### (2) A plurality of reaction vessels

There is provided a single charging part, to which two, three, or more reaction vessels are connected. The specifications such as the size and the shape of the reaction vessels may be the same, partly different, or totally different. It is possible to create a feature in handlability, function controllability such as equalizing a nitrate-removing effect in a water tank, and designability.

### <2-3 Design example of reaction vessel in consideration of installation>

For example, there is provided a reaction vessel having a shape adapted to the corner part of a water tank. It is possible to create a feature in installability, stability, and handlability.

### <2-4 Design example in combination with other functions>

### (1) Combination with other water purification functions

For example, there is provided a form in which the present bioreactor for removing nitrate is combined with an existing ammonia oxidation filtration tank. It is possible to create a feature in multifunctionality and space-saving properties.

### (2) Addition of mechanism for reaction regulation or control

The reaction in a reaction vessel may be regulated or controlled, for example, by adding a mechanism for rotating the reaction vessel using a motor or by adding a thermostat.

### <3 Others>

In the bioreactor for removing nitrate of the present invention, at least a part of the outer wall of the reaction vessel is an organic acid-permeable structure. That is, this is a configuration in which a fermentation vessel for performing anaerobic fermentation and an organic acid-permeable structure are integrated. However, unlike this configuration, it is also possible to configure, by separating the above two functions in the reaction vessel, a bioreactor for removing nitrate comprising an anaerobic fermentation tank provided with a charging part and one or a plurality of organic acid-permeable structure tanks connected thereto by a tube structure.

Further, the present invention is configured such that the reaction vessel itself is installed and used under water for the purpose of removing nitrate in the whole hydrosphere. However, there may also be a configuration in which a reaction vessel is floated and used in a suitable state on the water surface, for example, for the purpose of removing nitrate in the hydrosphere mainly in the vicinity of the water surface.

### Industrial Applicability

According to the bioreactor for removing nitrate, the method for producing biofilm for removing nitrate, and the method for removing nitrate of the present invention, nitrate ions can be efficiently and practically removed by a simple configuration. The present invention can be widely applied, regardless of the scale, to small-scale applications such as domestic-level water tanks, to large-scale water treatment facilities such as aquariums, culture facilities, sewage treatment plants, and human waste treatment facilities, or to polluted open hydrosphere such as pond and lake, and is an invention having a high industrial utility value.

That is, the use of the bioreactor for removing nitrate of the present invention or the like allows the nutrient salt contained in nutrient salt-containing water to be assimilated by a microorganism to also be converted to a feed of an organism again, thus allowing efficient assimilation by an organism group living in an environment.

The present invention has been originally made to solve the problem of removing nitrate in nutrient salt-containing water, but it can also provide the effect of supplying a plant nutrient source. That is, a nitrate-based fertilizer may be put on the inside of the bioreactor for removing nitrate of the present invention to allow the fertilizer to gradually ooze out into treated water. Only NO₃ is taken by a microorganism film as a respiratory substance from KNO₃ or the like permeated through a reaction vessel wall made of a porous material such as brick to the outside, and only basic cation K⁺ is released into treated water. Thereby, elements necessary for the growth of plants, such as K, Ca, and Mg, can be safely supplied to water to be treated without containing excessive nitrate.

## Claims

1. A bioreactor for removing nitrate which allows a microorganism to metabolize nutrient salt in nutrient salt-containing water, the bioreactor comprising: a reaction vessel; and a charging part provided on the reaction vessel for charging a fermentation source into the reaction vessel, the reaction vessel being for anaerobically fermenting the fermentation source charged into the reaction vessel to produce organic acids, and being provided, as at least a part thereof, with an organic acid-permeable structure through which the organic acids can permeate, wherein the bioreactor is installed and used such that the reaction vessel is under water and a charging end of the charging part is above the water surface to allow the nitrate in the nutrient salt-containing water to be removed.

2. The bioreactor for removing nitrate according to claim 1, wherein the organic acid-permeable structure is formed of a porous material.

3. The bioreactor for removing nitrate according to claim 1 or 2, wherein the organic acid-permeable structure comprises pores having two or more pore diameters.

4. The bioreactor for removing nitrate according to claim 1, wherein the organic acid-permeable structure comprises a ceramic material including brick and unglazed tile.

5. The bioreactor for removing nitrate according to claim 1, wherein the organic acid-permeable structure comprises a ceramic material including brick and unglazed tile, and an auxiliary material including sawdust.

6. The bioreactor for removing nitrate according to any of claims 1 to 5, wherein the organic acid-permeable structure is formed as the whole of at least one side surface of the reaction vessel.

7. The bioreactor for removing nitrate according to any of claims 1 to 6, wherein the charging part is a charging tube.

8. A method for producing biofilm for removing nitrate having a nitrate-removing function in a bioreactor for removing nitrate according to any of claims 1 to 7, the method for producing biofilm for removing nitrate comprising the steps of: providing an organic carbon compound as the fermentation source; charging the fermentation source into the reaction vessel through the charging part to thereby degrade the fermentation source by anaerobic fermentation to produce organic acids; and allowing the produced organic acids to permeate through the organic acid-permeable structure out of the reaction vessel to thereby produce biofilm comprising a nitrate-utilizing microorganism on an outside surface of the organic acid-permeable structure in an aerobic environment.

9. The method for producing biofilm for removing nitrate according to claim 8, wherein the organic carbon compound is a readily degradable saccharide including sucrose.

10. A method for removing nitrate in nutrient salt-containing water using a bioreactor for removing nitrate according to any of claims 1 to 7, the method for removing nitrate comprising:
providing an organic carbon compound as the fermentation source;
charging the fermentation source into the reaction vessel through the charging part to thereby degrade the fermentation source by anaerobic fermentation to produce organic acids;
allowing the produced organic acids to permeate through the organic acid-permeable structure out of the reaction vessel to thereby produce biofilm comprising a nitrate-utilizing microorganism on an outside surface of the organic acid-permeable structure in an aerobic environment; and decomposing and removing the nitrate in the nutrient salt-containing water with the biofilm.

11. The method for removing nitrate according to claim 10, wherein the organic carbon compound is a readily degradable saccharide.

12. The method for removing nitrate according to claim 11, wherein the readily degradable saccharide is a disaccharide including sucrose and maltose.

13. The method for removing nitrate according to claim 11, wherein the readily degradable saccharide is a monosaccharide including galactose, fructose, glucose, and mannose.

14. The method for removing nitrate according to claim 11, wherein the readily degradable saccharide is a polysaccharide including amylose, amylopectin, starch, agarose, polydextrose, and mannan.

15. The method for removing nitrate according to any of claims 10 to 14, wherein a liquid is charged in a controlled amount into the charging part, to thereby control the permeated amount of the organic acids.

16. The method for removing nitrate according to claim 15, wherein a hydrophilic liquid including water is used as the liquid.

17. The method for removing nitrate according to claim 15 or 16, wherein a hydrophobic liquid is charged into the charging part to thereby increase an internal degree of anaerobicity to control the permeated amount of the organic acids.
